# EUROPÄISCHE PATENTANMELDUNG

(11) **EP 4 331 372 A1**
(43) Veröffentlichungstag der Anmeldung: **06.03.2024**
(21) Anmeldenummer: 22193628.9
(22) Anmeldetag: 02.09.2022
(51) Int. Cl.: A23F 3/40, A23L 27/24, C12C 5/02, A23F 3/10, A23L 2/38, C12G 1/022, C12G 3/02

(54) **HERSTELLUNG VON GETRÄNKEN AUS NEBENSTRÖMEN VON GEWÜRZPFLANZEN**

(71) Anmelder: Justus-Liebig-Universität Gießen, 35390 Gießen (DE)
(72) Erfinder: Stephan, Alexander, 55270 Bubenheim (DE); Zorn, Holger, 35435 Wettenberg (DE); Fraatz, Marco Alexander, 35392 Giessen (DE); Büttner, Julia, 35390 Giessen (DE); Möller, Annika, 61194 Niddatal (DE)
(74) Vertreter: Stumpf, Peter

(57) **Zusammenfassung**

Getränk, umfassend mindestens einen fermentativen Extrakt, dadurch gekennzeichnet, dass der fermentative Extrakt aus mindestens einem Agrar-Nebenstrom gewonnen ist, wobei der mindestens eine Agrar-Nebenstrom ein Agrar-Nebenstrom aus der Gewürzherstellung ist, beispielsweise ein Safran-Nebenstrom, der ganze Blüten und/oder Blütenblätter und/oder Staubbeutel und/oder Narben der Safranpflanze umfasst.

## Beschreibung

Die vorliegende Erfindung betrifft die fermentative Herstellung von Getränken aus einem oder mehreren Nebenströmen von Gewürzpflanzen, insbesondere aus den Blüten des Safrans (*Crocus spec.,* beispielsweise *Crocus sativus L.*, der Stammform *Crocus cartwrightianus,* sowie weiteren Krokusarten).

### Stand der Technik

Gewürze sind Pflanzenteile, die wegen ihres Gehaltes an natürlichen Inhaltsstoffen als geschmack- und/oder geruchgebende Zutaten zu Lebensmitteln bestimmt sind. Gewürzpflanzen sind Pflanzen, von denen Teile als Gewürze dienen. Bei der Gewinnung von Gewürzen fallen die nicht als Gewürz genutzten Pflanzenteile als Nebenströme an (sog. Agrar-Nebenströme), beispielsweise (je nach Gewürz) in Form von Schalen, Stängeln, Stielen, Zweigen, Wurzeln, Wurzelstöcken, Zwiebeln, Blättern u.a.m. Als Nebenströme werden daher hierin alle Pflanzenteile von Gewürzpflanzen angesehen, die nicht zu dem jeweiligen Gewürz verarbeitet werden. Die Nebenströme von Gewürzpflanzen können jedoch auch geschmacks- und/oder geruchgebende und/oder weitere ernährungsphysiologisch vorteilhafte natürliche Inhaltsstoffe enthalten.

Die getrockneten Narben von *Crocus sativus* L. sind weltweit als Safranfäden ein teures und sehr beliebtes Gewürz und Färbemittel. Die restlichen Teile der Blüten (Staubbeutel und Blütenblätter) werden als Nebenströme verworfen, obwohl sie bekanntermaßen reich an wertvollen Inhaltsstoffen wie Crocinen und Polyphenolen sind.

Angebaut wird Safran in Afghanistan, Iran, Kaschmir und in einigen Regionen in Europa, wie Südfrankreich, Spanien, Türkei, Griechenland, Italien, Schweiz und Österreich (Pannonischer Safran (*Crocus austriacus*)*.* Safran wird im Stand der Technik vor allem als Gewürz, Puder oder Pflanzenbestandteil in Getränken als Färbemittel oder Geschmacksmittel verwendet. Bekannt sind auch medizinische und kosmetische Anwendungen von Safran. Fermentationen von Teilen der Safranpflanze werden lediglich mit dem Ziel der Gewinnung von Alkohol, bzw. alkoholischen Getränken, beschrieben. Auf diesem Wege können prinzipiell auch nichtalkoholische Getränke hergestellt werden, jedoch erfordert dies die aufwendige Entfernung des Alkohols aus dem durch die Fermentation erhaltenen Medium. Beispiele für die Verwendung von Safran in Getränken aus dem Stand der Technik sind etwa genannt in den Schriften WO2018/065581A1, DE69820810T2 und EP0825253B1.

In DE 102011053469 A1 wird ein Verfahren zur Herstellung eines Getränks durch Fermentation mit Myzel von wenigstens einem Basidiomyceten beschrieben. Das dort beschriebene Verfahren ist jedoch aufwendig, da der Rohstoff zur Herstellung des Mediums verflüssigt werden muss, beispielsweise durch Dampfentsaften, Verflüssigen mittels Enzymen, Emulgieren oder dergleichen mehr. Es werden dort zahlreiche Rohstoffe, bzw. Gruppen von Rohstoffen, genannt, die jedoch ausnahmslos aus Nahrungsmittelpflanzen stammen. Genannt werden die Gruppen Getreide, Nüsse, Gemüse und Obst. Im Rahmen von DE 102011053469 A1 wird der Begriff Blüte grundsätzlich im Sinne von Blütengemüse verstanden, d.h. es handelt sich dabei um Blüten von Gemüsesorten, bei denen der essbare Teile die Blüten sind, beispielsweise Artischocken. DE 102011053469 A1 offenbart nicht die Verwendung einer Gewürzpflanze oder Teilen einer Gewürzpflanze zur Herstellung eines Getränks, und legt dies auch in keiner Weise nahe.

Es ist somit im Stand der Technik nicht bekannt, Nebenströme von Gewürzpflanzen (beispielsweise Nelkenblätter, bzw. Blütenblätter oder die Stiele der Blütenknospen der Nelke, oder etwa die Schale der Muskatnuss) zur Herstellung eines Getränks zu verwenden. Lediglich der Einsatz von aus Gewürzpflanzen gewonnenen Gewürzen ist im Stand der Technik für die Aromatisierung von Getränken bekannt. Die Verwendung von Nebenströmen aus der Gewinnung von Gewürzen als Rohstoffe (bzw. als Substrate) für die Herstellung von Getränken ist dagegen völlig unbekannt.

Dies gilt insbesondere im Falle des Safrans. Die direkte Verwendung von Safran, der gesamten Safranpflanze oder Teilen der Safranpflanze als Grundlage für die Getränkeherstellung, insbesondere in fermentierter Form, ist im Stand der Technik bisher gänzlich unbekannt und wird auch nicht nahegelegt. Die Safran-Nebenströme, d.h. die nicht für die Gewinnung von Safran verwendeten Teile der Safranblüte sowie des Ernteausschusses, d.h. beispielsweise Safranblüten, die etwa mangels ausreichender Ausbildung der Narben nicht für die Gewinnung von Safran verwendet werden können, können bisher nicht nutzbringend verwendet werden.

### Aufgabe

Aufgabe der vorliegenden Erfindung ist es, die vorstehend beschriebenen Nachteile des Standes der Technik bei der Nutzung von Gewürzpflanzen, insbesondere des Safrans (*Crocus*) zu vermeiden. Die bisher als Agrar-Nebenströme angesehenen Teile von Gewürzpflanzen, beispielsweise Blütenblätter und Staubbeutel des Safrans, werden einer wirtschaftlichen bioökonomischen Nutzung zugeführt.

### Lösung der Aufgabe

Gelöst wird diese Aufgabe durch die vorliegende Erfindung, indem die bisher als Abfallstoffe angesehenen Agrar-Nebenströme von Gewürzpflanzen, zum Beispiel die Blüten des Safrans (nach Entnahme der Narben für die Safran-Gewinnung) durch eine dafür geeignete Fermentation nutzbar gemacht und für die Herstellung von Getränken verwendet werden.

Die bisher im Stand der Technik als nutzlose Abfallstoffe angesehenen Blüten des Safrans können gemäß erfinderischem Gedanken infolge ihrer Gehalte an wertvollen Inhaltsstoffen (z.B. Crocine und Polyphenole) als Grundlage für Nahrungsmittel, insbesondere Getränke dienen. Durch die Fermentation mit Pilzen der Abteilung Basidiomycota erfahren sie eine ernährungsphysiologische Aufwertung und werden einer wertentsprechenden Nutzung zugeführt.

Durch ein Screening verschiedener Pilze aus der Abteilung der Basidiomycota in Bezug auf die Bildung interessanter Aromastoffe bei Wachstum auf Nebenströmen des *Crocus sativus* L. wurde der Braunfäulepilz *Fomitopsis pinicola* als vielversprechender Kandidat ermittelt. *F. pinicola* ist in der Lage, aus den Safran-Nebenströmen (d.h. Safran-Blüten, oder auch nur einzelnen Teilen von Safran-Blüten wie beispielsweise Blütenblätter bzw. Staubblätter) ein ansprechendes fruchtiges Getränk zu produzieren. Zur Optimierung dieses Getränkes, mit Fokus auf die Reduzierung des Oxalsäuregehaltes und der Intensivierung des Aromas, wurden verschiedene Kultivierungsbedingungen und Medienzusammensetzungen getestet. Die kulturbegleitende Analytik erfolgt dabei beispielsweise bezüglich des pH-Wertes, des Oxalsäuregehaltes, des Aromaprofils sowie der Sensorik. Darüber hinaus werden wesentliche Schritte zur Prozessierung des Getränkes beschrieben. Positive und ernährungsphysiologisch relevante Wirkung des erfindungsgemäßen Fermentationsprozesses ist die Aromatisierung des aus den Agrar-Nebenströmen des Safrans hergestellten Getränks, so dass die ernährungsphysiologisch hochwertigen Inhaltsstoffe der Safran-Blüte für die Ernährung genutzt werden können. Als Agrar-Nebenströme des Safrans (= Safran-Nebenströme) werden hier die gesamten verbliebenen Blüten nach Entnahme der drei Safranfäden verstanden, oder auch nur einzelne Blütenteile wie beispielsweise die Staubblätter/Staubbeutel oder die Blütenblätter. Sowohl die gesamte Blüte (d.h. der verbliebene Rest der ursprünglich vollständigen Blüte nach Entnahme der Safranfäden), als auch Teile davon können einzeln oder gemeinsam jeweils einen Agrar-Nebenstrom des Safrans bilden. Dies gilt grundsätzlich für alle Agrar-Nebenströme von Gewürzpflanzen, die jeweils aus einem einzelnen oder mehreren Pflanzenteilen der jeweiligen Gewürzpflanze bestehen können.

Weiterhin ermöglicht der Gegenstand der Erfindung durch Einsatz von analog definierten Nebenströmen anderer Krokusarten wie beispielsweise der Stammform *Crocus cartwrightianus* als Fermentationssubstrat auch die Nutzung der Agrar-Nebenströme weiterer Krokusarten.

Der Umfang der Erfindung ist nicht beschränkt durch die hier beispielhaft offenbarten Ausführungsbeispiele. In der nachfolgenden Beschreibung umfassen beispielsweise Bereichsangaben stets alle - auch nicht explizit genannte - innerhalb der genannten Intervallgrenzen liegenden Zwischenwerte und alle denkbaren Teilintervalle.

Zusammenfassend lässt sich der Gegenstand der Erfindung in verschiedenen Ausführungsvarianten wie folgt beschreiben:
Ausführungsvariante 1: Getränk, umfassend mindestens einen fermentativen Extrakt, das dadurch gekennzeichnet ist, dass der mindestens eine fermentative Extrakt aus mindestens einem Nebenstrom gewonnen ist, der bei der Gewinnung eines Gewürzes aus einer Gewürzpflanze angefallen ist, wobei der mindestens eine Nebenstrom Schalen und/oder Stängel und/oder Stiele und/oder Zweige und/oder Wurzeln und/oder Wurzelstöcke und/oder Zwiebeln und/oder Blätter und/oder ganze Blüten und/oder Blütenblätter und/oder Staubbeutel und/oder Narben derjenigen Gewürzpflanze umfasst, von der der mindestens eine Nebenstrom stammt.

Ausführungsvariante 2: Getränk gemäß Ausführungsvariante 1, das dadurch gekennzeichnet ist, dass es sich bei dem mindestens einen Nebenstrom um einen Safran-Nebenstrom handelt, wobei der mindestens eine Safran-Nebenstrom ganze Blüten und/oder Blütenblätter und/oder Staubbeutel und/oder Narben der Safranpflanze, Crocus spec., umfasst.

Ausführungsvariante 3: Verfahren zur Herstellung eines Getränks gemäß Ausführungsvariante 1 oder 2, das dadurch gekennzeichnet ist, dass es folgende Schritte umfasst: a) Bereitstellung des Nebenstromes als Bestandteil des Fermentationsmediums, wobei das Fermentationsmedium eine Mischung aus einer wässrigen Flüssigphase und einer dispergierten Festphase ist, und wobei die dispergierte Festphase aus Zellen und/oder Zellbestandteilen und/oder Zellagglomeraten besteht, wobei Zellagglomerate auch ganze Blüten, ganze Blütenblätter, ganze Staubbeutel, ganze Schalen, ganze Stängel, ganze Stiele, ganze Zweige, ganze Wurzeln, ganze Wurzelstöcke, ganze Zwiebeln ganze Blätter umfassen; b) Inokulation des gemäß Schritt a) bereitgestellten Fermentationsmediums mit Myzel oder Sporen mindestens eines Pilzes der Abteilung Basidiomycota; c) Fermentation des gemäß Schritt b) inokulierten Fermentationsmediums; d) Gewinnung des fermentativen Extraktes durch zumindest teilweise Abtrennung der wässrigen Flüssigphase des Fermentationsmediums von der Festphase des Fermentationsmediums, wobei die Abtrennung durch mindestens ein Verfahren erfolgt, ausgewählt aus der Liste umfassend Dekatieren, Filtrieren, Zentrifugieren. Der so gewonnene Fermentative Extrakt stellt bereits eine erste Ausführungsform des erfindungsgemäßen Getränks dar; er kann direkt als Getränk verzehrt werden. Unter den Begriffen **ganze Blüten, ganze Schalen, ganze Wurzeln** usw. werden in dem Fachmann bekannter Weise mehr oder weniger große makroskopische Bruchstücke der betreffenden Pflanzenteile verstanden, wie sie direkt auf mechanische Art und Weise üblicherweise anfallen oder gewonnen bzw. geerntet werden.

Ausführungsvariante 4: Verfahren gemäß Ausführungsvariante 3, das dadurch gekennzeichnet ist, dass es weiterhin folgenden Schritt umfasst: e) Vermischen des gemäß Schritt d) gewonnenen fermentativen Extraktes mit optionalen weiteren Bestandteilen des Getränkes, unabhängig voneinander ausgewählt aus der Liste umfassend, Wasser, Ethanol, Kohlendioxid, Zucker, Zuckerersatzstoffe, Farbstoffe, Aromastoffe, Konservierungsmittel, Lebensmittelzusatzstoffe.

Ausführungsvariante 5: Verfahren gemäß Ausführungsvariante 3 oder 4, das dadurch gekennzeichnet ist, dass die Fermentationsbedingungen in folgenden Bereichen gehalten werden: Temperatur: 0 °C bis 50°C, bevorzugt 10°C bis 40 °C und besonders bevorzugt 15 - 30 °C; pH-Wert: 1,0 bis 9,0, bevorzugt 1,5 bis 8,0 und besonders bevorzugt 1,7 - 6,5; Fermentationsdauer: 0,25 h bis 300 h, bevorzugt 1 h bis 200 h und besonders bevorzugt 12 h - 168 h.

Ausführungsvariante 6: Verfahren gemäß Ausführungsvarianten 3 bis 5, das dadurch gekennzeichnet ist, dass der gemäß Schritt d) gewonnene fermentative Extrakt mindestens einem Reinigungs- und/oder einem Sterilisationsschritt unterzogen wird.

Ausführungsvariante 7: Verfahren gemäß Ausführungsvarianten 3 bis 6, das dadurch gekennzeichnet ist, dass es sich bei dem mindestens einen Pilz der Abteilung Basidiomycota um einen Pilz handelt, ausgewählt aus der Liste umfassend A. xantha, B. corium, F. fomentarius, F. betulina, F. pinicola, H. araucariae, H. marmoreus, I. benzoinum, L. sulphurous, L. betulina, P. radiate, P. pulmonarius, T. suaveolens, T. chioneus, W. cocos.

### Ausführungsbeispiele

### 1. Verwendete Materialien

Die für die Untersuchungen verwendeten Safranblüten wurden als Substrate sowohl in getrennter Form untersucht (Blütenblätter und Staubbeutel separat), als auch in nicht getrennter Form (gesamte Blüte ohne Blütennarbe).

Insgesamt wurden von den Erfindern beispielhaft 68 Pilze auf ihre Eignung zur Fermentation der Safran-Nebenströme getestet. Als Safran-Nebenströme gelten alle Teile der Safranpflanze, einzeln oder in Kombination miteinander, die nicht zur Gewinnung des Gewürzes Safran verwendet werden, insbesondere Blütenblätter und/oder Staubbeutel. Tabelle 1 gibt eine Übersicht über die getesteten Pilze unter Angabe der Bezugsquelle, des Kulturmediums und der Abteilung der Pilze.

**Tabelle 1: Übersicht über die getesteten Pilze, deren Herkunft, Kultivierungsmedium und Einordnung in Pilzabteilungen. Verwendete Abkürzungen und deren Bedeutung sind: CBS: Westerdijk Fungal Biodiversity Institute, Utrecht, NL; DSMZ: Deutsche Sammlung von Mikroorganismen und Zellkulturen, Braunschweig, DE; GÖT: Institut für Molekulare Holzbiotechnologie & Technische Mykologie, Göttingen, DE; JE: Jena Microbial Resource Collection, Jena, DE; LCB: institutseigene Sammlung, Gießen, DE; M: Mycelia NV, Deinze, BE; MEA: Malzextrakt-Agar; MEPA: Malzextrakt-Pepton-Agar; SNL: Standardnährlösungs-Agar; A: Ascomycota; B: Basidiomycota; M: Mycomycota. Die für die Herstellung des Getränks beispielhaft genutzten Pilze sind in Fettdruck markiert.**

| **NAME** | **STAMMNUMMER** | **MEDIUM** | **ABTEILUNG** |
|---|---|---|---|
| *Abortiporus biennis* | CBS 676.70 | MEA | B |
| *Agaricus bitorquis* | DSMZ 4135 | MEPA | B |
| *Agrocybe aegerita* | LCB 279 | MEA | B |
| *Amylostereum areolatum* | JE SF010259 | MEPA | B |
| *Antrodia xantha* | LCB 200 | MEPA | B |
| *Armillaria mellea* | DSMZ 2941 | MEA | B |
| *Bjerkandera adusta* | DSMZ 4708 | MEA | B |
| *Botrytis cinerea* | DSMZ 5145 | SNL | A |
| *Byssomerulius corium* | LCB FP8 | MEA | B |
| *Ceriporiopsis rivulosa* | CBS 434.48 | MEA | B |
| *Clitocybe gibba* | LCB FP71 | SNL | B |
| *Clitopilus passeckerianus* | DSMZ 901 | MEA | B |
| *Coprinellus micaceus* | LCB 212 | MEPA | B |
| *Coprinus comatus* | LCB FP91 | MEA | B |
| *Cyathus striatus* | DSMZ 1652 | MEA | B |
| *Daedaleopsis confragosa* | LCB 134 | MEPA | B |
| *Diaporthe sp.* | LCB FP122 | MEA | A |
| *Dichomitus squalens* | DSMZ 9615 | MEA | B |
| *Diplomitoporus flavescens* | LCB 195 | MEPA | B |
| *Exidia glandulosa* | DSMZ 1012 | MEA | B |
| *Fistulina hepatica* | DSMZ 4987 | MEA | B |
| ***Flammulina velutipes*** | **DSMZ 1658** | **MEA** | **B** |
| *Fomes fomentarius* | LCB 167 | MEA | B |
| ***Fomitopsis betulina*** | **LCB 201** | **MEPA** | **B** |
| ***Fomitopsis pinicola*** | **CBS 483.72** | **MEA** | **B** |
| *Ganoderma australe* | DSMZ 9943 | MEA | B |
| *Gloeophyllum odoratum* | DSMZ 12011 | MEA | B |
| *Hericium cirrhatum* | CBS 101412 | MEA | B |
| *Hericium erinaceus* | LCB 103 | MEA | B |
| *Heterobasidion araucariae* | CBS 744.94 | MEA | B |
| ***Hypsizygus marmoreus*** | **DSMZ 23610** | **MEA** | **B** |
| *Inonotus obliquus* | CBS 314.39 | MEA | B |
| *Isaria farinosa* | CBS 481.73 | MEA | A |
| ***Ischnoderma benzoinum*** | **LCB FP28** | **MEA** | **B** |
| *Kuehneromyces mutabilis* | DSMZ 1013 | MEA | B |
| *Laetiporus sulphureus* | DSMZ 1014 | MEA | B |
| *Lentinellus cochleatus var. inolens* | CBS 913.87 | MEA | B |
| *Lentinula edodes* | CBS 389.89 | MEA | B |
| *Lenzites betulina* | LCB 215 | MEPA | B |
| *Lycoperdon pyriforme* | DSMZ 8676 | MEA | B |
| *Macrolepiota procera* | LCB 202 | MEPA | B |
| *Marasmius rotula* | LCB 191 | MEPA | B |
| *Meripilus giganteus* | DSMZ 8693 | MEA | B |
| *Mortierella alpina* | LCB FP11 | MEA | M |
| *Mycetinis scorodonius* | CBS 137.83 | MEA | B |
| *Phialocephala oblonga* | LCB FP234 | MEPA | A |
| *Phlebia radiata* | DSMZ 5111 | MEA | B |
| *Pholiota aurivella* | DSMZ 1018 | MEA | B |
| *Pholiota carbonaria* | DSMZ 8240 | MEA | B |
| *Pleurotus eryngii* | DSMZ 8264 | MEA | B |
| *Pleurotus floridanus* | GÖT 17 | MEA | B |
| *Pleurotus ostreatus* | GOT 508 | MEA | B |
| *Pleurotus pulmonarius* | LCB FP65 | MEPA | B |
| *Pleurotus sapidus* | DSMZ 8266 | MEA | B |
| *Porodaedalea pini* | DSMZ 5238 | MEA | B |
| *Postia caesia* | DSMZ 5124 | MEA | B |
| *Psathyrella piluliformis* | LCB 118 | MEPA | B |
| *Punctularia subhepatica* | CBS 388.66 | MEA | B |
| *Rhizopus azygosporus* | CBS 357.93 | MEA | M |
| *Sarcodontia crocea* | LCB P726 | MEPA | B |
| *Sparassis crispa* | LCB FR32 | MEA | B |
| *Stereum complicatum* | DSMZ 5182 | MEA | B |
| *Stropharia rugosoannulata* | M 5012 | MEA | B |
| *Trametes hirsuta* | LCB 190 | MEPA | B |
| ***Trametes suaveolens*** | **DSMZ 5237** | **MEA** | **B** |
| *Tulasnella spec.* | LCB 199 | MEPA | B |
| *Tyromyces chioneus* | DSMZ 5242 | MEA | B |
| *Wolfiporia cocos* | CBS 279.55 | MEA | B |

Die zahlreichen für die Herstellung des Getränks beispielhaft verwendeten Basidiomyceten (vgl. Tabelle 1) zeigen, dass Pilze aus der gesamten Abteilung Basidiomycota vorteilhaft verwendet werden können, um das Getränk herzustellen, und zwar mit - je nach verwendeter Art - individueller Geschmacksrichtung, die durch den jeweils verwendeten Pilz durch den Fermentationsprozess hervorgerufen wird. Neben dem verwendeten Pilz hat auch das eingesetzte Substrat (Blüte, Blütenblätter, Staubbeutel, Schalen, Stängel, Stiele, Zweige, Wurzeln, Wurzelstöcke, Zwiebeln, Blätter usw. - je nach Gewürzpflanze, von der der Nebenstrom für die Herstellung des Getränks stammt) Einfluss auf das sich ausbildende Aroma und somit die Geschmacksrichtung. Es fällt daher ebenfalls in den Umfang der Erfindung, verschiedene Mischungen von Blüten, Blütenblättern, Schalen, Stängeln, Stielen, Zweigen, Wurzeln, Wurzelstöcken, Zwiebeln, Blättern sowie Staubbeuteln usw. als Substrat für die Fermentation einzusetzen, je nachdem, von welcher Gewürzpflanze der Nebenstrom für die Herstellung des Getränks stammt. Die sich im Rahmen der Fermentation ergebende Geschmacksichtung resultiert somit aus der dem jeweiligen Pilz zu eigenen (individuellen) physiologischen Nutzung des ihm zur Verfügung gestellten Substrates, d.h. Agrar- bzw. Safran-Nebenstroms. Soweit möglich werden die Geschmacksrichtungen lebensmittelanalytisch identifiziert (s. u., zum Beispiel die Abschnitte "Kulturbegleitende Analytik" und "Kulturbegleitende Sensorik").

### 2. Stammhaltung

Die beispielhaft untersuchten Pilze (Tabelle 1) werden auf Malzextrakt-Agarplatten (MEA), Malzextrakt-Pepton-Agarplatten (MEPA) bzw. Standardnährlösungs-Agarplatten (SNL) zur Stammhaltung kultiviert. Die Zusammensetzungen der Medien sind in Tabelle 2 aufgeführt; alle Medien werden für 20 min bei 121 °C dampfsterilisiert (SHP Steriltechnik, Satuelle, DE). Alle Medien werden mit Reinstwasser angesetzt, angegebene pH-Werte werden vor dem Autoklavieren eingestellt.

**Tabelle 2: Zusammensetzungen der Emers- und Submerskulturmedien; mit Stern (*) markierte Chemikalien/Bestandteile werden separat autoklaviert, Emersmedien werden 15 g/L Agar-Agar zugesetzt.**

| **VERWENDUNG** | **MEDIUM** | **CHEMIKALIEN** | **KONZENTRATION** |
|---|---|---|---|
| Referenz | ME | Malzextrakt | 20 g/L |
| | MEP | Malzextrakt | 20 g/L |
| | pH 5,6 | Sojapepton | 3 g/L |
| | SNL pH 6,0 | Glucose-Monohydrat* | 30 g/L |
| | | Asparagin-Monohydrat | 4,5 g/L |
| | | Kaliumdihydrogenphosphat | 1,5 g/L |
| | | Magnesiumsulfat-Hydrat | 0,5 g/L |
| | | Hefeextrakt | 3 g/L |
| | | Eisen(III)-chlorid-Hexahydrat | 80 ng/L |
| | | Zink(II)-sulfat-Heptahydrat | 90 ng/L |
| | | Mangan(II)-sulfat-Monohydrat | 30 ng/L |
| | | Kupfer(II)-sulfat-Pentahydrat | 5 ng/L |
| | | EDTA | 400 ng/L |
| Screening | emers | Blütenblätter oder Staubbeutel* | 20 g/L |
| | Getränk | Gemisch aus Blütenblättern & Staubbeuteln | 25 g/L |
| | | Glucose-Monohydrat* | 30 g/L |

Zur Kultivierung wird jeweils ein ca. 0,5 cm² großes Myzelstück des Pilzes einer zu etwa 80% bewachsenen Agarplatte auf eine neue Agarplatte gesetzt, die Platte verschlossen z.B. mit Parafilm^{®} und bei 24 °C im Dunkeln inkubiert.

### 3. Screening auf Bestandteilen der Safranblüte

Die Kultivierung der Pilze auf den Bestandteilen der Safranblüte (Blütenblätter oder Staubbeutel) erfolgt beispielhaft in Emerskultur. Hierbei werden die Nebenströme (Blütenblätter bzw. Staubbeutel) als alleinige Nährstoffquelle eingesetzt und jeweils Agar-Platten mit den beiden Substraten (Tabelle 2, Screening) hergestellt. Diese werden mit den 68 ausgewählten Pilzen (Tabelle 1) analog zur Stammhaltung angeimpft und bei 24 °C im Dunkeln inkubiert.

### 4. Sensorische Analyse

Für die Auswahl geeigneter Pilz-Substrat-Kombinationen wird der Geruch der Pilze auf den Substratmedien herangezogen. Emerskulturen werden je nach Wachstum des Pilzes sensorisch beurteilt. Die Kulturen werden von einem sensorisch geschulten Panel (n=4) mit einer beschreibenden Prüfung mit Bewertung des Gesamteindruckes auf einer Skala von 0 (sehr negativ) bis 5 (sehr positiv) bewertet. Als Vergleich wird der Geruch der nicht inokulierten Agarplatte genutzt. Fachkundigen Personen ist bekannt, wie derartige sensorische Analysen und Bewertungen im Einzelnen durchzuführen sind, sodass eine genauere Beschreibung an dieser Stelle nicht erforderlich ist.

### 5. Kultivierung und Optimierung zur Getränke-Herstellung

Die Kultivierung ausgewählter Pilze (fett markiert in Tabelle 1) in Submerskultur zur Getränke-Herstellung findet unter *Food* Grade-Bedingungen statt; alle Lösungen werden mit Trinkwasser hergestellt. Zunächst werden Vorkulturen mit 2% ME-Medium (Tabelle 2) angesetzt. Dazu wird ein Stück der mit Pilzmyzel bewachsenen Agarplatte entnommen und mit einem Dispergiergerät (10.000 U/min, 30 s, IKA, Staufen, DE) im Vorkulturmedium homogenisiert. Die Kulturen werden anschließend bei 150 U/min, 24 °C und Lichtausschluss kultiviert. Nach sieben Tagen wird die bewachsene Vorkultur homogenisiert (10.000 U/min, 30 s) und das Hauptkulturmedium (Tabelle 3) mit 10% homogenisierter Vorkultur angeimpft. Die Kultivierung der Hauptkultur erfolgt wiederum bei 150 U/min, 24 °C und Lichtausschluss. Nach Abschluss der Kultivierung wird die gesamte Kultur über ein Leinentuch abfiltriert, das Myzel wird verworfen. Die Überstände werden zur sensorischen Beurteilung (vgl. Abschnitt 6) und Analytik (vgl. Abschnitt 7) verwendet.

Es ist ein besonderer Vorteil des erfindungsgemäßen Verfahrens, dass der verwendete Rohstoff (Agrar-Nebenstrom) vor der Verarbeitung (Fermentation) nicht in einen fließfähigen Zustand überführt werden muss, sondern direkt in fester Form, wie er im Rahmen der Gewürzherstellung anfällt, mit der wässrigen Flüssigphase des Fermentationsmediums in Kontakt gebracht werden kann. Nach Zugabe des Agrar-Nebenstroms zur wässrigen Flüssigphase liegt das Fermentationsmedium in fertiger Form vor, umfassend eine wässrige Flüssigphase und eine Feststoffphase. Die Feststoffphase ist im Wesentlichen durch den Agrar-Nebenstrom gebildet, der in der Flüssigphase dispergiert ist. Unter *dispergiert* wird hier im Zusammenhang mit dem Fermentationsmedium auch verstanden, dass die Festphase in groben Stücken oder ganzen Pflanzenteilen in der Flüssigphase verteilt ist. Der Rohstoff bzw. Agrar-Nebenstrom umfasst - je nachdem, von welcher Gewürzpflanze er stammt - Blüten, Blütenblätter, Staubbeutel, Schalen, Stängel, Stiele, Zweige, Wurzeln, Wurzelstöcke, Zwiebeln, Blätter usw. Es kann sich dabei auch um eine Mischung verschiedener Pflanzenteile handeln. Eine eventuelle Vorbehandlung des Rohstoffs/Agrar-Nebenstroms, beispielsweise Vermahlung, Pelletierung, Pulverisierung, Homogenisierung, Dispergierung o. dgl. fällt aber ebenso in den Umfang der Erfindung, da dadurch ggf. eine Prozessoptimierung erreicht werden kann, beispielsweise eine bessere Pumpfähigkeit des Fermentationsmediums infolge Zerkleinerung des ursprünglich stückigen Rohstoffes. Der Begriff *fließfähiger Zustand* beschreibt hierbei nicht nur Flüssigkeiten, die durch Verflüssigung im engeren Sinne erhalten werden, sondern auch Suspensionen, Dispersionen, Aufschlämmungen und dergleichen, die ähnlich wie Flüssigkeiten ebenfalls grundsätzlich fließfähig sind. Bevorzugt ist jedoch der Einsatz des Rohstoffs/Substrats ohne Vorbehandlung, da dadurch zeitaufwendige und kostspielige Verfahrensschritte vermieden werden können. Auch das Risiko mikrobieller Kontaminationen während des Herstellungsprozesses wird durch die direkte Einbringung der Agrar- bzw. Safran-Nebenströme ohne weitere Vorbehandlungen deutlich reduziert und der Gesamtprozess damit ausfallsicherer.

Die Optimierung der Kultivierungsparameter erfolgt hier beispielhaft ausgehend vom Medium des Screenings (2,5% Safran-Nebenströme, 30 g/L Glucose) für die Kultivierung des Pilzes *F. pinicola,* ohne dass damit eine Beschränkung hierauf verbunden ist. Es werden sowohl der Erntezeitpunkt, der Anteil der Safran-Nebenströme und der Glucosegehalt im Medium als auch die pH-Werte der Vor- bzw. Hauptkulturen variiert (Tabelle 3). Alle anderen Parameter werden im Vergleich zum Screening wie oben beschrieben im Rahmen der Beispiele nicht verändert. Es ist jedoch erfindungsgemäß, auch andere als die genannten Parameter zu variieren; Anlass dafür kann etwa sein, den Geschmack an unterschiedliche Vorlieben der Konsumenten anzupassen.

Der nach der Fermentation, d.h. der Kultivierung des mindestens einen ausgewählten Pilzes in wenigstens einem Agrar- bzw. Safran-Nebenstrom, erhaltene Kultur-Überstand stellt einen fermentativen Extrakt dar, der an sich bereits das erfindungsgemäße Getränk in einer ersten Ausgestaltung darstellt. Aus diesem fermentativen Extrakt werden weitere Ausgestaltungen des erfindungsgemäßen Getränks hergestellt, um verschiedenste konsumentenseitig gewünschte Geschmacksvariationen bereitzustellen und/oder lebensmittelrechtliche Vorgaben zu erfüllen.

Aus den Überständen der Kultivierungen werden die zu verkostenden Getränke durch Zugabe von je 0,5 mL Zuckerlösung (100 g Saccharose in 100 mL Wasser) und ggf. je 0,5 mL Citronensäurelösung (13 g/L, Tabelle 3) zu 8 mL Filtrat hergestellt. Die Zugabe der Zuckerlösung nach der Fermentation wird ebenfalls beispielhaft optimiert und ist nicht einschränkend zu verstehen. Hier werden beispielsweise verschiedene Zuckerquellen (Saccharose, Glucose, Allulose) und Konzentrationen (1,5% bis 10%) bei Überständen der optimierten Fermentation (markiert in Tabelle 3) getestet.

Die Pasteurisation des finalen Getränkes erfolgt in verschlossenen Glasflaschen im Wasserbad bei 75 °C für 10 bis 30 min mit anschließender sofortiger Abkühlung der Gefäße auf Raumtemperatur.

Das finale Getränk kann zusätzlich mit variablen Mengen Kohlendioxid versetzt (carbonisiert) werden, beispielsweise durch folgende Vorgehensweise: Das zu carbonisierende finale Getränk wird in ein mit CO₂ vorgespültes Keg-Fass gefüllt und anschließend Kohlenstoffdioxid eingeleitet, bis der gewünschte Grad an Carbonisierung erreicht ist, etwa durch Beaufschlagung mit einem Druck von 1,5 bar über einen Zeitraum von 5 min. und anschließender Lagerung für 4 d bei 4 °C und gelegentlichem Umschütteln. Die genaue Vorgehensweise der Carbonisierung kann natürlich in aus dem Stand der Technik bekannter Weise variiert werden, ohne dadurch den Umfang der Erfindung zu verlassen.

### 6. Kulturbegleitende Sensorik

Für die Auswahl der Pilze werden die Getränke von 2-6 Prüfpersonen in einer Rangordnungsprüfung mit Bewertung mit Skala von 0 (schlecht) bis 10 (gut) bezüglich des Gesamteindruckes beurteilt.

Die Verkostung der Getränke des *F. pinicola* während der Medienoptimierung wird mittels einfach beschreibender Prüfung der Geruchs- und Geschmacksattribute durchgeführt. Hier wird ebenfalls die Farbe des Getränkes betrachtet.

Die Durchführung und Auswertung derartiger sensorischer Prüfungen erfolgen entsprechend der jeweiligen DIN-Norm.

Die hier beschriebene Vorgehensweise bei der Durchführung der Fermentation/Getränke-Herstellung ist nicht als einschränkend für das Herstellungsverfahren anzusehen, sondern als beispielhaft. Fachkundigen Personen ist bekannt, dass Parameter wie beispielsweise Rührgeschwindigkeit, Temperatur, Lichtverhältnisse, Gärdauer usw. in weiten Bereichen variiert werden können, ohne den Umfang der Erfindung oder ihrer Äquivalente zu verlassen. Es ist insbesondere auch bekannt, dass beim Hochskalieren in den Produktionsmaßstab andere Werte der Verfahrensparameter gewählt werden können oder gar müssen, um die Fermentation in gewünschter Weise durchzuführen. Alle diese allgemein üblichen Variationen sind vom Umfang der Erfindung mit umfasst.

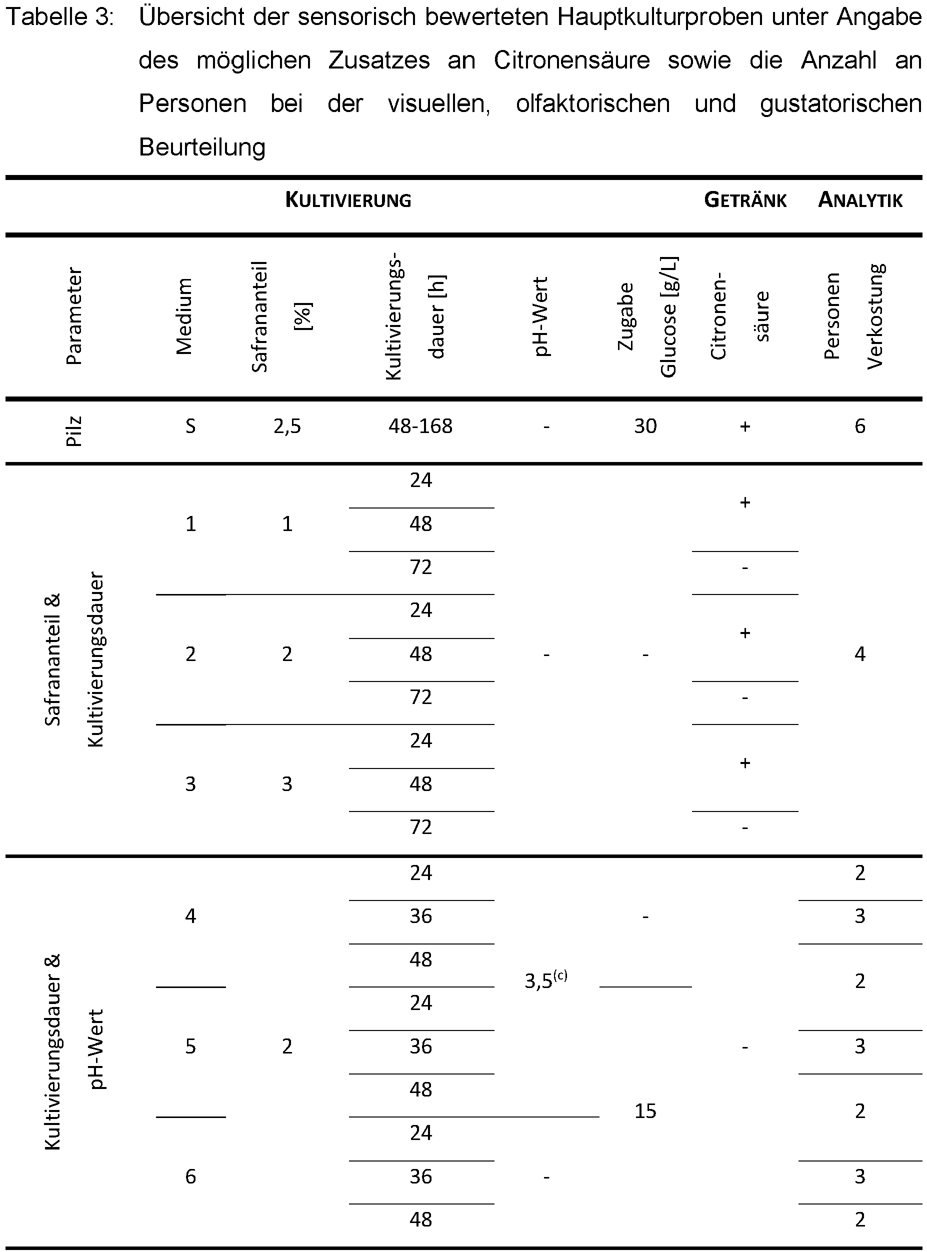

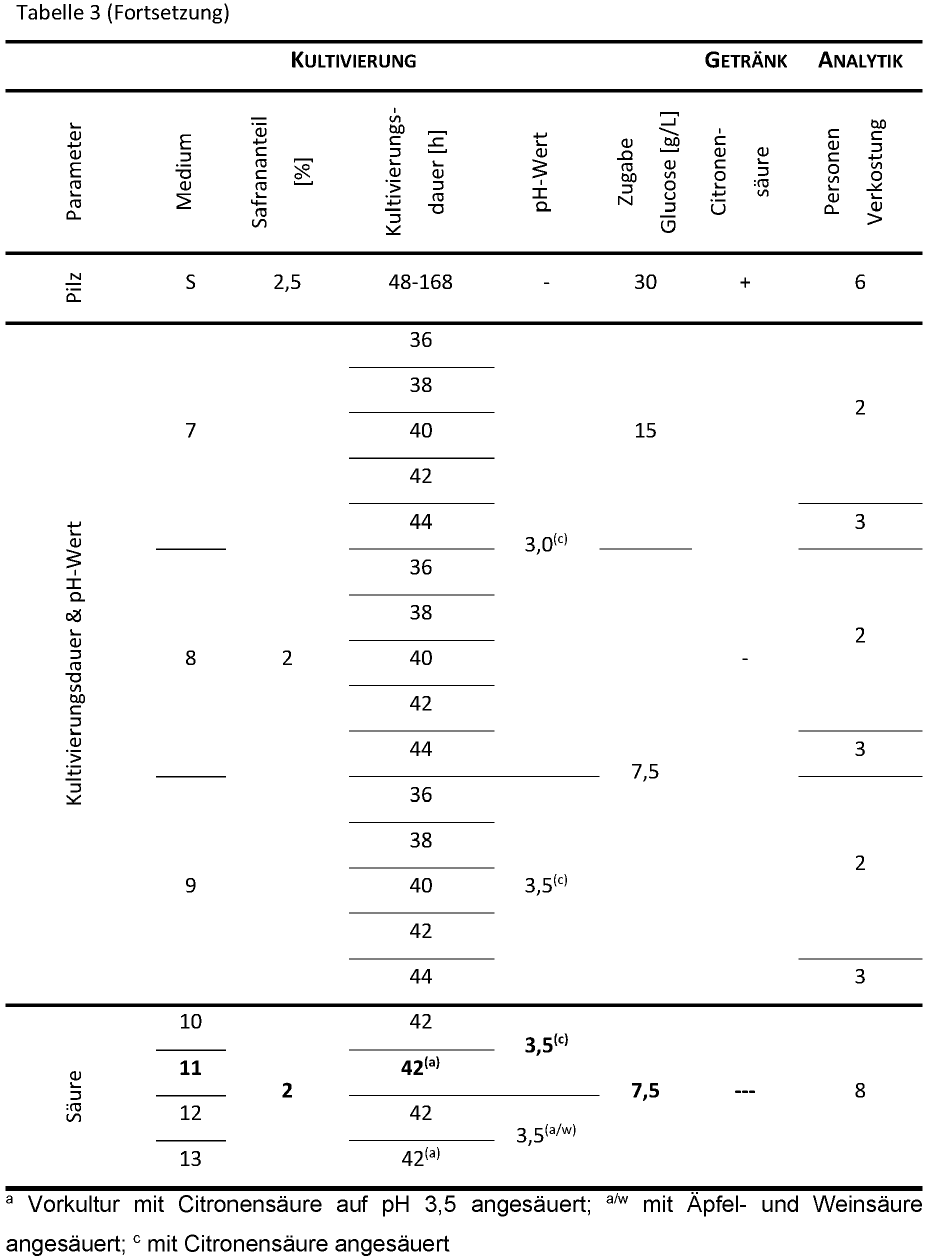

### 7. Kulturbegleitende Analytik

Der pH-Wert-Verlauf während der Fermentation bzw. der Getränke-Herstellung wird mittels pH-Meter (Mettler Toledo, Gießen, DE) in einem Aliquot des Überstandes bestimmt.

Die während der Fermentation gebildete Oxalsäure wird in den Überständen nach Membranfiltration mittels Ionenchromatographie (IC) und einer externen Kalibrierung quantifiziert. Die Messung erfolgt an einem Metrohm 883 Basic IC plus mit Leitfähigkeitsdetektor (Metrohm, Filderstadt, DE), ausgestattet mit einer Metrosep A supp 4-250/4.0 Trennsäule und einer Metrosep A supp 4/5 Guard 4.0 Vorsäule. Der Eluent setzt sich aus 1,8 mM Na₂CO₃, 1,7 mM NaHCO₃ und 2% Aceton (Fluss 1 mL/min isokratisch) zusammen, die Suppressorlösung besteht aus 50 mM H₂SO₄ (Fluss 0,3 mL/min bei 18 U/min). Weitere Parameter sind im Folgenden aufgeführt: Laufzeit 22 min, Injektionsvolumen 20 µL, Säulentemperatur Raumtemperatur.

### 8. GC-MS/MS(-O)-Analyse

Die Identifizierung der Aromastoffe von Submerskulturen ausgewählter Pilz-Substrat-Kombinationen erfolgt mittels GC-MS/MS(-O) nach *solid phase microextraction* (SPME) und Zugabe von 20 µL des internen Standards *β*-Cyclocitral (0,169 g/L bzw. 0,0845 g/L) sowie 0,6 g Natriumchlorid zu 4 mL Kulturüberstand. Die untersuchten Nebenströme werden ohne Vorbehandlung zur Analyse eingesetzt. Die Extraktion der Aromastoffe erfolgt mittels SPME-Faser (Divinylbenzen/Carboxen^{®}/Polydimethylsiloxan, Konditionierungstemperatur 270 °C, Agilent Technologies, Waldbronn, DE). Dazu wird nach Inkubation (5 min, 250 U/min, 40 °C) der *headspace vials* im Agitator (GERSTEL, Mülheim an der Ruhr, DE) für 30 min extrahiert (250 U/min, 40 °C). Die Desorptionszeit im SPME *direct inlet liner* beträgt 60 s bei einer Injektionstemperatur von 250 °C. Die Probenaufgabe erfolgt splitlos.

Ebenfalls werden von den Substraten und dem Getränk in der optimierten Version Flüssig-Flüssig-Extrakte angefertigt. Dafür werden 4 g Trockenmasse der Substrate bzw. 40 mL Kulturüberstand mit 40 mL Methanol und 40 mL gesättigter Natriumchloridlösung versetzt und mittels Dispergiergerät für 1 min bei 10.000 U/min homogenisiert bzw. beim Kulturüberstand für 1 min bei 500 U/min gerührt. Anschließend wird dreimal für jeweils 30 min mit 40 mL n-Pentan/Diethylether-Gemisch (1:1,12, v/v) bei Raumtemperatur und 500 U/min extrahiert. Zur Phasentrennung wird bei 3.500 g für 15 min in PTFE-Bechern zentrifugiert. Die vereinigten organischen Phasen werden über Natriumsulfat getrocknet. Der so gewonnene Extrakt wird zur halbautomatischen *solvent assisted flavor evaporation* (SAFE) eingesetzt. Die SAFE wird unter folgenden Konditionen durchgeführt: Wasserbadtemperatur 50 °C, Wasserumlauftemperatur 50 °C, Druck 1-2,2·10⁻³ mbar, Öffnung des Dosierventils für 1 s alle 20 s. Die SAFE-Extrakte wurden nach Trocknung über Natriumsulfat mittels Vigreux-Destillation bei 43 °C auf ca. 2 mL eingeengt. Je 1 µL der Extrakte werden splitlos in den Gaschromatographen injiziert.

Zur Identifizierung der Substanzen werden 0,1 bis 1 mg Reinsubstanz in 1 mL Methanol gelöst, hiervon werden 2 µL in 1 mL n-Heptan verdünnt. Bei flüssigen Substanzen werden direkt 2 µL Reinsubstanz in 1 mL n-Heptan gelöst. 1 µL der Standardlösungen werden splitlos in den Gaschromatographen injiziert.

Die GC-Analyse wird an einem 7890A GC (Agilent Technologies) mit polarer Agilent VF-WAXms-Säule (30 m × 0,25 mm i.D. × 0,25 µm), gekoppelt mit einem Agilent 7000B Quadrupol Massenspektrometer sowie einem Olfaktometrie-Detektorport (ODP 3) (GERSTEL) durchgeführt. Als Trägergas wird Helium (5.0) mit einem konstanten Fluss von 1,56 mL/min verwendet. Die Ofentemperatur wird zu Beginn für 3 min bei 40 °C gehalten, anschließend um 5 °C/min auf 240 °C erhöht und hier wiederum für 7 min gehalten.

Der Gasfluss wird mit einem Split von 1:1 in das MS und in den ODP geleitet. Weitere Einstellungen sind im Folgenden aufgeführt: Septum Purge-Fluss 3 mL/min, MS-Modus *scan* im Q1, Scan-Bereich m/z 33 - 300, Ionisationsenergie 70 eV, EI-Quellen-Temperatur 230 °C, Quadrupol-Temperaturen 150 °C, MS Transferline-Temperatur 250 °C, He Quench-Gas 2,25 mL/min, N₂ Kollisionsgas 1,5 mL/min, ODP 3 Transferline-Temperatur 250 °C, ODP Mischkammer-Temperatur 150 °C, ODP Makeup-Gas N₂.

### Ergebnisse des Screenings der Pilze

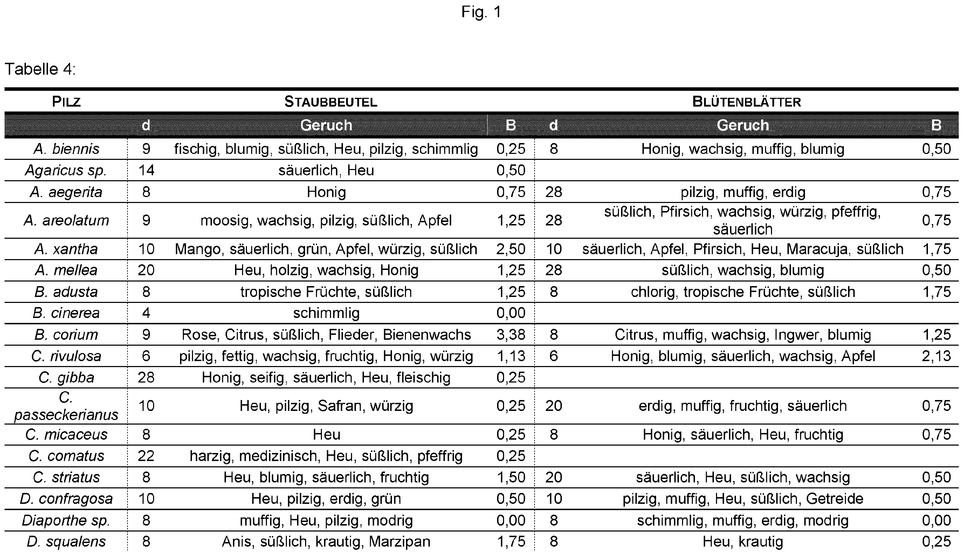

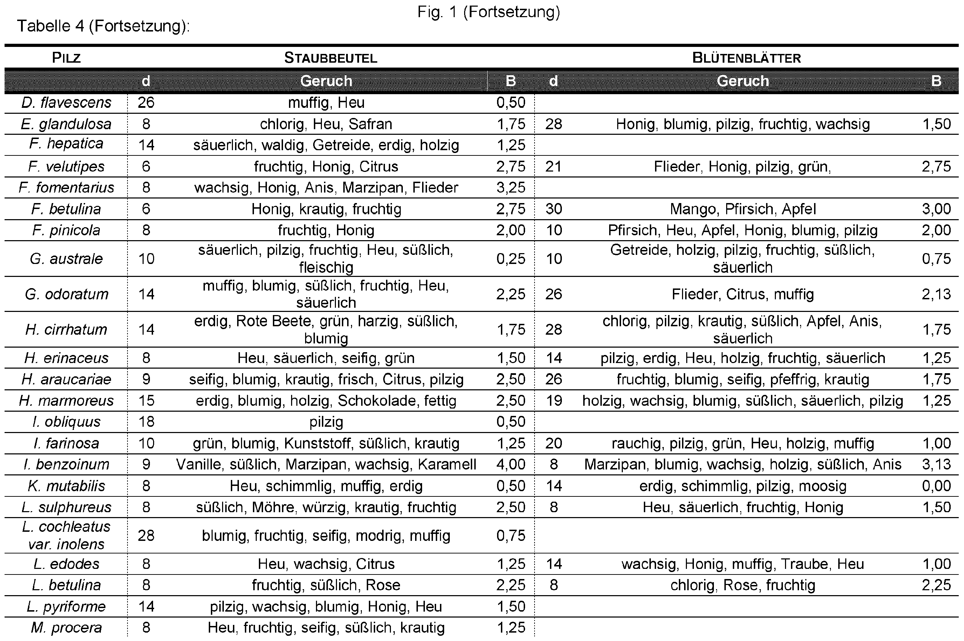

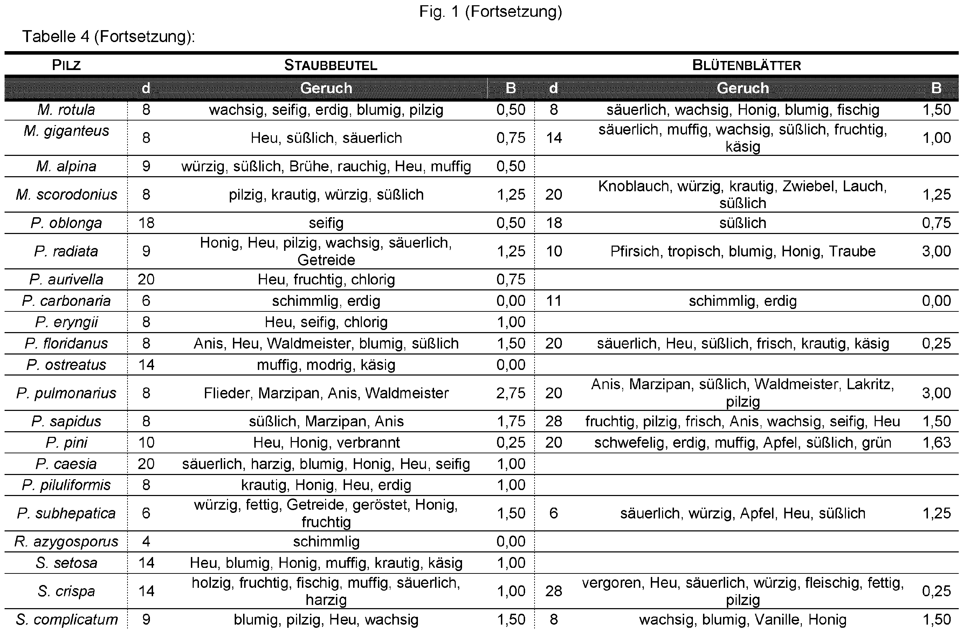

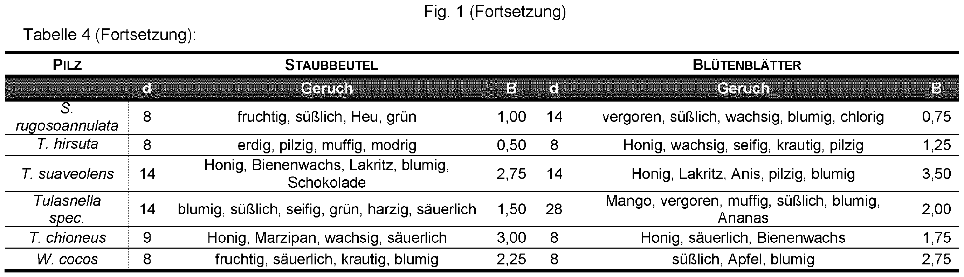

Die Emerskulturen der 68 getesteten Pilze auf den beiden Substraten Safranblütenblätter und Staubbeutel zeigen substratspezifisch sowohl unterschiedliche Wachstumsgeschwindigkeiten als auch unterschiedliche sensorische Eindrücke. Für jede kultivierte Pilz-Substrat-Kombination ist in Tabelle 4 (Fig. 1) exemplarisch für einen Kulturtag das Ergebnis der sensorischen Beschreibung und Bewertung aufgeführt. Hierbei wird deutlich, dass die verschiedenen Nebenströme bei einigen Pilzen keinen Einfluss auf das gebildete Aroma haben (z.B. *A. xantha* und *T. chioneus*), bei anderen Pilzen jedoch deutliche Unterschiede zwischen den Substraten registriert werden (z.B. *P. radiata* und *T*. *hirsuta*), wodurch die Schlussfolgerung gezogen werden kann, dass die beiden Nebenströme unterschiedliche Vorstufen für Biotransformationen enthalten bzw. diese für verschiedene Pilze unterschiedlich verfügbar sind. Allgemein ist zu beobachten, dass die Pilze auf den Blütenblättern deutlich langsameres Wachstum zeigen als auf dem Agar mit den Staubbeuteln. Weil zum Teil kein oder nur ein sehr geringes Wachstum erfolgt, konnten nicht alle Pilze sensorisch bewertet werden. Dies weist ebenfalls auf die unterschiedliche Verfügbarkeit von Nährstoffen in den Nebenströmen hin.

Auf Grundlage der sensorischen Bewertung und des Wachstums der Pilze werden die Pilz-Substrat-Kombinationen beispielhaft für die weiteren Untersuchungen ausgewählt. Die Pilze *I. benzoinum* (Geruchseindruck Vanille, Marzipan) und B. *corium* (Flieder, Citrus) werden für die Fermentation der Staubbeutel am besten bewertet. *I. benzoinum* (Marzipan, blumig) wird ebenfalls bei der Fermentation auf den Blütenblättern genauso wie *P. pulmonarius* (Waldmeister, Anis) am besten bewertet (Fig. 1, Tabelle 4). *F. velutipes, F. betulina, F. pinicola, H. marmoreus, I. benzoinum* und *T. suaveolens* werden wegen der Bewertung, der Art des gebildeten Aromas und der Wachstumsgeschwindigkeit beispielhaft für das Screening zur Produktion eines fermentierten Getränkes auf Basis der Safran-Nebenströme ausgewählt.

### Ergebnisse des Screenings des Getränks

Für das Screening zur Produktion des Getränks werden beispielhaft sechs Pilze in Submerskultur untersucht. Die Pilze und deren sensorische Eindrücke sind in Tabelle 5 gezeigt. Die beispielhaft ausgewählten Erntezeitpunkte richten sich nach dem wahrgenommenen Geruchseindruck im Vergleich zum nicht fermentierten Medium, wobei nach sieben Kulturtagen alle Kulturen geerntet werden, die bis dahin keine Änderung des Geruchseindruckes zeigen. Verglichen mit den sensorischen Beschreibungen der Emerskulturen (Tabelle 4, Fig. 1) zeigen sich zumeist Übereinstimmungen (*I*. *benzoinum* & *F. pinicola*) bei den Geruchseindrücken. Die Geschmackseindrücke weichen zum Teil stark von den Geruchseindrücken ab und sind nur teilweise für Getränke erwünscht, was sich auch in der Bewertung der Proben widerspiegelt. Dies kann jedoch - je nach ggf. individuellem persönlichen Geschmacksempfinden - sowohl positiv als auch negativ bewertet werden. Die Geschmackseindrücke nach Schokolade und Nuss sind hierbei in den vorliegenden Beispielen eher unerwünscht, wohingegen fruchtige und blumige Noten als angenehm bewertet werden. Insgesamt wird das Getränk des *F. pinicola* mit fruchtigem Geruch und Geschmack nach Maracuja und Pfirsich am besten bewertet, weswegen dieses für das weitere Vorgehen beispielhaft ausgewählt wird.

**Tabelle 5: sensorische Bewertung im Screening für die Getränkeherstellung; Spalte B: Bewertung des Gesamteindruckes auf einer Skala von 0 (schlecht) bis 10 (gut).**

| **PILZ** | **TAG** | **GERUCH** | **GESCHMACK** | **B** |
|---|---|---|---|---|
| *F. velutipes* | 3 | krautig, Flieder | nussig, Honig, süß, geröstet | 5,2 |
| *F. betulina* | 7 | säuerlich, fruchtig, vergoren | sauer | - |
| *F. pinicola* | 2 | fruchtig (Maracuja), säuerlich | fruchtig (Maracuja, Pfirsich), sauer | 7,3 |
| *H. marmoreus* | 7 | rauchig, Heu | süß, krautig, bitter | - |
| *I. benzoinum* | 3 | Marzipan, Kirsche, Apfel, Pflaume | süß, Honig, Kuchenteig | 4,8 |
| *T. suaveolens* | 2 | Schokolade, Karamell, fruchtig | Schokolade, Karamell | 6,7 |

### Kulturbegleitende Sensorik

Während der Medienoptimierung zur Herstellung des fermentierten Getränks auf Basis der Safran-Nebenströme mittels *F. pinicola* werden diverse Geruchs- und Geschmacksattribute sowie Beschreibungen des Mundgefühls und der Farbe beispielhaft untersucht (Tabelle 6). Deutlich erkennbar ist hierbei, dass die Fermentationsprodukte nach 72 h sehr sauer schmecken, weswegen die Fermentationsdauer in einzelnen Beispielen verkürzt ist. Auch werden 2% Safran-Nebenströme als Grundlage für das Medium beispielhaft gewählt, da in den vorliegenden Beispielen geringere Anteile nur schwache Geruchs- und Geschmackseindrücke erzielen und höhere Konzentrationen der Nebenströme einen vermehrt wahrnehmbaren bitteren Nachgeschmack und einen Geruch nach Heu aufweisen. Eine Fermentationsdauer von 36 bis 48 h ergibt Getränke mit einem intensiv fruchtigen Aroma ohne bitteren Nachgeschmack nach Heu; besonders die Getränke nach 42 h Fermentationszeit weisen diese harmonischen Eindrücke auf. Die Einstellung des pH-Wertes vor der Fermentation auf 3,0 resultiert in als stark sauer wahrgenommenen Produkten, wohingegen ein pH-Wert von 3,5 zu Beginn der Kultivierung zu einer angenehmen Säure führt. Zur weiteren Reduzierung der Oxalsäuregehalte werden die Vorkulturen ebenfalls beispielhaft auf einen pH-Wert von 3,5 angesäuert. Das daraus resultierende Getränk weist fruchtige Geruchseindrücke nach Pflaume und Quitte auf und kann auch im Geschmack als fruchtig und teeartig beschrieben werden. Medium 11 wird somit beispielhaft bevorzugt als Medium zur Herstellung des fermentierten Getränks ausgewählt. Fachkundigen Personen ist bekannt, dass die hier beschriebenen Geschmacks- und Geruchseindrücke und insbesondere die geschilderten Vorlieben sehr stark vom Kulturkreis der konsumierenden Person und individuellen Vorlieben beeinflusst sind, so dass andere geschmacks- und geruchsbeeinflussende Ausgestaltungen ebenfalls erfindungsgemäß sind, und zwar auch selbst dann, wenn sie hier nicht als optimal oder gar eher als nachteilig dargestellt sind, denn in diesem speziellen Zusammenhang der geschmacklichen Bewertung kann ein von einem Personenkreis oder einer einzelnen Person als nachteilig bewertetes Charakteristikum (Geruch, Geschmack) von einem anderen Personenkreis oder einer anderen Person als positiv und wünschenswert bewertet werden.

**Tabelle 6: sensorische Beschreibung der Getränke in den verschiedenen Optimierungsstufen**

| **MEDIUM** | **DAUER [h]** | **GERUCH** | **GESCHMACK** | **FARBE** |
|---|---|---|---|---|
| **1** | 24 | Pflaume | fruchtig (Pfirsich), Citronensäure, adstringierend | gelb, |
| | 48 | tropisch, vergoren | sauer, fruchtig, pelzig/adstringierend | Pfirsich, Koralle, |
| | 72 | fruchtig, tropisch, vergoren | sauer, fruchtig | Lachs |
| **2** | 24 | Heu, süßlich, fruchtig | pelzig/adstringierend, süß, fruchtig | gelb, braun, |
| | 48 | Litschi, fruchtig, Pfirsich, süßlich | sauer, süß, Pfirsich, pelzig/adstringierend | Pfirsich, Koralle, |
| | 72 | fruchtig, tropisch, vergoren | sauer | Lachs |
| **3** | 24 | Honig, Apfelsaft | fruchtig, süß, bitter | braun, gelb |
| | 48 | Heu, Honig, Pflaume | süß, bitter, Heu, Honig, fruchtig, pelzig | gelb, braun, |
| | 72 | fruchtig, vergoren | sauer | orangefarben |
| **4** | 24 | fruchtig, Citronensäure | fruchtig, Heu, sauer | gelb |
| | 36 | säuerlich | sauer, fruchtig, | braun, orange, Koralle |
| | 48 | Citronensäure | sauer, bitter | Kupfer, Koralle |
| **5** | 24 | Honig, fruchtig | Heu, sauer, fruchtig | gelb |
| | 36 | säuerlich, fruchtig, Zitroneneistee | Pfirsich, sauer, fruchtig, pelzig, Honig | braun, |
| | 48 | fruchtig, säuerlich, Apfel | sauer | gold-gelbbraun |
| **6** | 24 | fruchtig, Heu, Honig, vergoren | süß, fruchtig, Heu, bitter | gelb |
| | 36 | fruchtig, säuerlich, Honig | fruchtig (Citrus), sauer, süß, Heu, pelzig | trüb, braun |
| | 48 | fruchtig, Honig, vergoren, Pflaume | sauer, Heu, pelzig, fruchtig | gold-gelb-braun |
| **7** | 36 | Honig, fruchtig, Pflaume, Pfirsich | sauer, Heu | gelblich |
| | 38 | fruchtig/tropisch, säuerlich | fruchtig, Honig, nussig | trüb, braun |
| | 40 | säuerlich, vergoren, fruchtig | sauer, Heu, Karamell | Kupferfarben |
| | 42 | säuerlich, grün, vergoren | sauer | |
| | 44 | säuerlich, Honig, fruchtig, Pfirsich | sauer, pelzig, nussig | |
| **8** | 36 | fruchtig, Heu | sauer, Heu, bitter | gelblich |
| | 38 | vergoren, säuerlich | sauer, fruchtig, pelzig | trüb, braun |
| | 40 | Citronensäure, fruchtig | sauer, Heu, fruchtig | Kupferfarben |
| | 42 | Apfelsaft, vergoren, säuerlich | sauer, Heu | |
| | 44 | säuerlich, fruchtig, Honig, vergoren | sauer | |
| **9** | 36 | Honig, fruchtig, Pflaume, Pfirsich | fruchtig, süß, Heu | gelblich |
| | 38 | säuerlich, fruchtig (Pfirsich) | fruchtig, Honig, nussig | gelblich |
| | 40 | säuerlich, vergoren, fruchtig | süß, sauer, fruchtig, Heu | Kupfer-farben, braun |
| | 42 | säuerlich, fruchtig, Pfirsich | fruchtig, sauer, süß | |
| | 44 | blumig, Pfirsich | sauer, Honig, Karamell, fruchtig | |
| **10** | 42 | Honig, fruchtig, säuerlich, rapsartig, süßlich, Apfel, Pfirsich-Konserve | sauer (Citronensäure), Heu, fruchtig, adstringierend, vergoren | gelblich |
| **11** | 42 | Pflaume, Birne, Quitte, Honig, fruchtig, blumig | sauer, Apfel, süß, Tee, adstringierend | |
| **12** | 42 | Apfel, Honig, vergoren, säuerlich, Pflaume, fruchtig | sauer, süß, holzig, fettig, adstringierend, fruchtig | |
| **13** | 42 | fruchtig, Pfirsich, säuerlich, blumig, süßlich, Honig | sauer, süß, fruchtig, Apfel, adstringierend | |

Als Zuckerquelle wird in einem Rangordnungstest beispielhaft Saccharose (Rang 1,3) vor Glucose (Rang 2,2) und Allulose (Rang 2,5) festgelegt. Der Rangordnungstest zur Zuckerkonzentration im Bereich von 1,5% bis 10% ergibt 5% Saccharose als optimale Konzentration (Rang 1,9 vor 7,5% auf Rang 2,1).

Mit dem fermentierten Getränk auf Basis von Medium 11 werden darüber hinaus beispielhaft Versuche zur Pasteurisierung und Carbonisierung durchgeführt. Da sich die Geruchs- und Geschmacksattribute, sowie die Farbe der pasteurisierten Proben nach 10 min, 20 min oder 30 min Pasteurisierung nicht wesentlich unterscheiden, wird hiermit gezeigt, dass dieser Prozessschritt keine negativen Auswirkungen auf das Getränk hat und somit zur Steigerung der Produktsicherheit durchgeführt werden sollte. Die Carbonisierung des Getränkes führt weder zu einer gesteigerten noch verminderten Akzeptanz des Getränkes.

### Kulturbegleitende Analytik

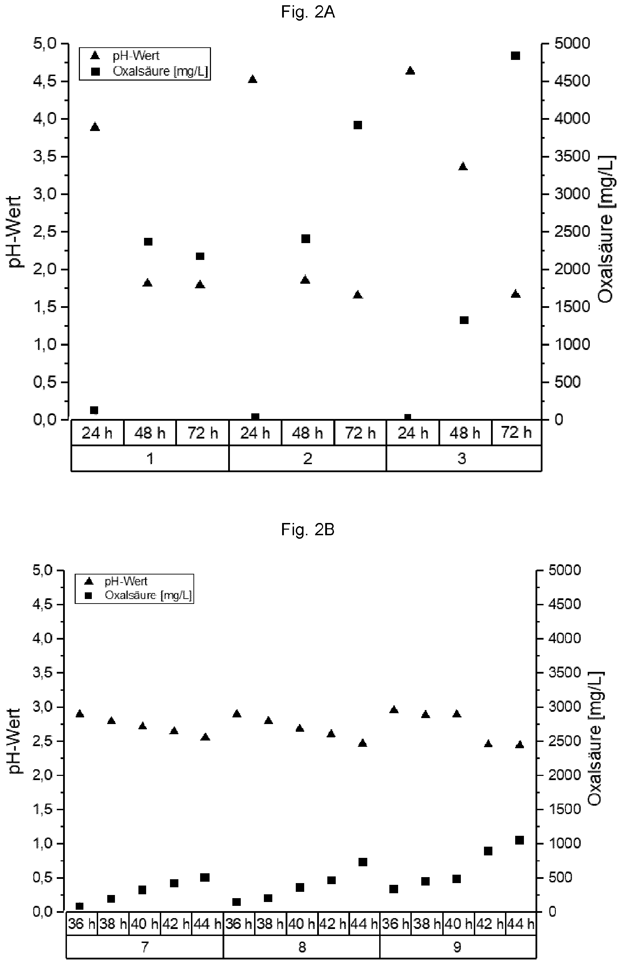

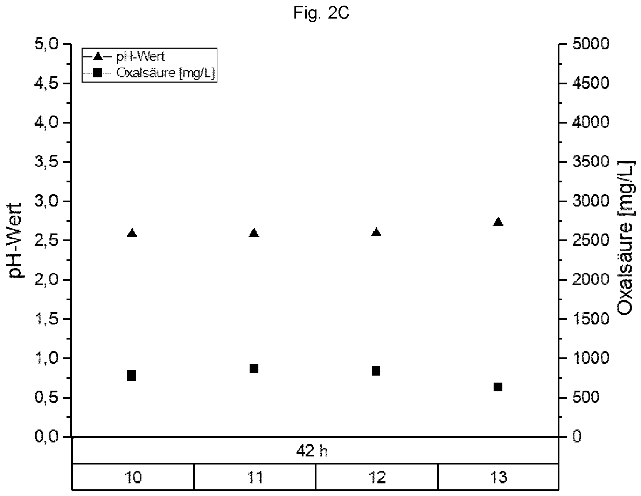

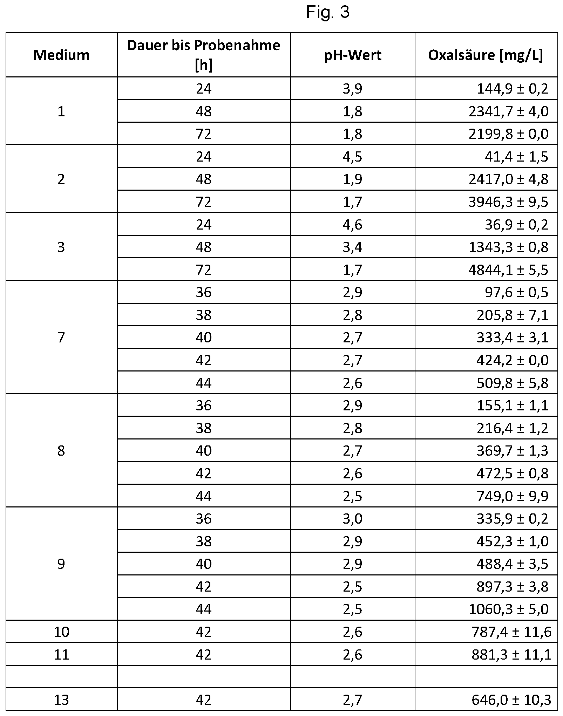

Fig. 2A, 2B und 2C zeigen beispielhaft die Entwicklung des pH-Wertes und der Oxalsäurekonzentration der fermentierten Getränke im Verlauf der Optimierung (Rohdaten der Grafiken vgl. Tabelle in Fig. 3). Erkennbar ist ein starker Zusammenhang zwischen dem pH-Wert und der Oxalsäurekonzentration, weswegen davon ausgegangen werden kann, dass andere organische Säuren eine untergeordnete Rolle in diesen Fermentationen spielen. Die Zunahme der Oxalsäurekonzentration im Fermentationsverlauf zeigt sich vor allem in Optimierungsphase I, wobei nach 72 h Fermentation ein pH-Wert kleiner 2 und eine Oxalsäurekonzentrationen von bis zu 4,8 g/L (Medium 3) bestimmt werden. Dieser deutliche Anstieg der Oxalsäurekonzentration bzw. das starke Absinken des pH-Wertes kann in der Optimierungsphase II nicht beeinflusst werden, die pH-Werte sinken nach 48 h Kultivierungszeit auf Werte kleiner gleich pH 1,8. Die Einstellung des pH-Wertes vor der Fermentation auf 3,0 bzw. 3,5, die Zugabe von Glucose und die Reduzierung der Kultivierungszeit in Optimierungsphase III hingegen zeigen einen Einfluss auf die Oxalsäureproduktion. Hier sinkt der pH-Wert nicht unter 2,4 nach 44 h Kultivierungszeit; die Oxalsäurekonzentrationen betragen nach 44 h nur noch maximal 1,1 g/L. Die Ansäuerung der Vorkulturmedien auf einen pH-Wert von 3,5, ebenso wie die Hauptkulturmedien ergeben in der letzten Optimierungsphase einen pH-Wert von 2,6 und eine Oxalsäurekonzentration von 0,9 g/L im zur Produktion des fermentierten Getränkes ausgewählten Medium, wobei sich die Medien 10-13 lediglich im Rahmen biologischer Schwankungen voneinander unterscheiden.

Während der Fermentation der Nebenströme können durch den Pilz *F. pinicola* einige für den bereits erwähnten fruchtigen Geruch entscheidende Aromastoffe gebildet werden (Tabelle 7). Auch werden Aromastoffe, die in den unbehandelten Nebenströmen bzw. den Kulturmedien natürlicherweise enthalten sind, abgebaut; dies führt unter anderem zur Abnahme des Geruchseindruckes nach Heu im Laufe der Kultivierung. In den Safran-Nebenströmen können unter anderem Safran-typische Aromastoffe wie Safranal, Isophoron und 4-Oxoisophoron vorläufig identifiziert werden; diese sind teilweise auch in den fermentierten Getränken wiederzufinden und können dort zum Gesamtaroma beitragen. Die von *F. pinicola* gebildeten Aromastoffe unterscheiden sich in den verschiedenen Entwicklungsstufen des Getränkes (Screening FPI, M2, G, G10 in Tabelle 7) nur geringfügig. Dihydro-*β*-ionol, Zimtalkohol und 3-Phenylpropanol können jedoch nur im finalen Getränk und dessen pasteurisierter Probe identifiziert werden.

**Tabelle 7: Vergleich der RI mit Standard-RI (RI_{NIST} & RI_{STD}.) der mittels SPME-GC-MS/MS identifizierten Aromastoffe; BB: Blütenblätter, SB: Staubbeutel, B&S: Gemisch der Nebenströme im natürlichen Verhältnis, FPI: Fermentationsprodukt des F. pinicola im Screening, M2: 42 h fermentiertes Medium 2, G: Medium 11 42 h fermentiert mit Zuckerzusatz (finales Getränk), G10: finales Getränk 10 min pasteurisiert, M11: Medium 11 nicht fermentiert mit Zuckerzusatz**

| **SUBSTANZ** | **RI** | **RI_{NIST}** | **RI_{STD}** | **BB** | **SB** | **B&S** | **FPI** | **M2** | **G** | **G10** | **M11** |
|---|---|---|---|---|---|---|---|---|---|---|---|
| 2-Methylbutanal | 911 | 915 | 909 | x | x | x | | | | | |
| 3-Methylbutanal | 914 | 922 | 914 | x | x | x | | | | | |
| Valeraldehyd | 976 | 978 | 975 | x | x | | | | | | |
| Isobutylacetat | 1010 | 1005 | 1010 | | | | | x | | | |
| Hexanal | 1080 | 1080 | 1082 | x | x | x | | | | | x |
| 3-Caren | 1147 | 1147 | 1148 | x | x | x | | | | | |
| Heptanal | 1183 | 1186 | 1187 | x | x | x | | | | | x |
| D-Limonen | 1198 | 1199 | 1196 | x | x | x | | | | | |
| (*E*)-Hex-2-enal | 1216 | 1220 | - | x | | | | | | | |
| 2-Pentylfuran | 1231 | 1235 | 1231 | | x | | | | | | x |
| Octan-3-on | 1252 | 1253 | 1249 | | | | x | x | x | x | |
| p-Cymen | 1268 | 1268 | 1268 | | | | x | | x | | x |
| Acetoin | 1281 | 1283 | 1283 | x | | | | | | | |
| Octanal | 1286 | 1289 | 1284 | x | | | | | | | x |
| Octan-3-ol | 1390 | 1396 | 1387 | | | | x | x | x | x | |
| Nonanal | 1390 | 1390 | 1388 | x | x | x | | | | | x |
| Heptan-1-ol | 1454 | 1462 | 1451 | | | | | | x | x | |
| Oct-1-en-3-ol | 1448 | 1446 | 1451 | x | | | | | | | x |
| Essigsäure | 1452 | 1452 | 1468 | x | x | x | | | | | |
| Furfural | 1465 | 1462 | 1454 | x | | x | | | | | x |
| Theaspiran B | 1495 | 1500 | 1487 | | | | x | x | x | x | |
| Benzofuran | 1502 | 1488 | - | | | | | x | x | x | x |
| Benzaldehyd | 1521 | 1520 | 1519 | x | x | x | | | | | x |
| Linalool | 1545 | 1544 | 1551 | | | | | x | x | x | x |
| Octan-1-ol | 1555 | 1549 | 1549 | | | | | | x | x | x |
| 5-Methyl-2-furfural | 1572 | 1570 | 1565 | | | | | | | | x |
| Methyl-2-furoate | 1577 | 1572 | 1578 | | | | | x | | | |
| Isobuttersäure | 1578 | 1581 | 1563 | | x | | | | | | |
| Isophoron | 1586 | 1595 | 1606 | x | x | x | | x | x | x | x |
| 2-Methylbenzo-furan | 1592 | 1563 | 1613 | | | | x | x | x | x | x |
| Butyrolacton | 1630 | 1626 | 1639 | x | x | x | x | x | x | x | |
| Safranal | 1642 | 1648 | 1657 | x | x | x | x | x | x | x | x |
| 2-Hydroxy-isophorone | 1659 | 1675 | - | | x | | | | x | | x |
| Nonan-1-ol | 1662 | 1658 | 1664 | | | | | | | x | |
| 2-Methyl-buttersäure | 1677 | 1660 | 1666 | x | x | x | | | x | | |
| (Z)-Non-3-en-1-ol | 1685 | 1682 | 1676 | | | | x | x | x | x | |
| 4-Oxoisophoron | 1688 | 1690 | 1700 | x | x | x | | | | | x |
| α-Terpineol | 1692 | 1697 | 1698 | | | | | | x | | x |
| 4-Ethyl-benzaldehyd | 1704 | 1730 | - | | | | | | x | x | x |
| 2,4-Dimethyl-benzaldehyd | 1735 | 1742 | 1760 | | | | | | x | x | x |
| 2(5H)-Furanon | 1757 | 1745 | 1763 | x | x | x | x | x | x | x | x |
| Dihydrooxo-phoron | 1775 | 1782 | - | x | x | x | | | | | |
| Cuminaldehyd | 1781 | 1786 | 1773 | | x | | | | | | |
| 2-Phenyl-ethylacetat | 1811 | 1809 | 1819 | | x | | | | | | |
| Dihydro-β-ionon | 1827 | 1854 | 1842 | | x | | | | | | |
| Hexansäure | 1842 | 1839 | 1840 | x | x | x | | | | | |
| Benzylakohol | 1870 | 1879 | 1871 | | x | x | | | | | |
| Phenylethanol | 1909 | 1915 | 1910 | x | x | x | x | x | x | x | x |
| Heptansäure | 1957 | 1960 | 1958 | | | | | | | | x |
| Maltol | 1956 | 1965 | 1942 | x | | | | | | | |
| Dihydro-***β***-ionol | 1961 | 1966 | - | | | | | | x | x | |
| *γ*-Nonalacton | 2025 | 2028 | 2014 | | | | x | x | | | |
| 3-Phenyl-propanol | 2050 | 2048 | 2044 | | | | | | x | x | |
| *γ*-Decalacton | 2140 | 2144 | 2135 | | | | | x | | | |
| Nonansäure | 2169 | 2174 | 2153 | | | | x | x | x | x | x |
| Zimtalkohol | 2286 | 2286 | 2281 | | | | | | x | x | |
| Myristylalkohol | 2165 | 2174 | 2162 | | | | x | | | | |

Die Analytik der Nebenströme und des finalen Getränkes mittels GC-MS/MS nach Flüssig-Flüssig-Extraktion (Tabelle 8) zeigt ähnliche Ergebnisse im Vergleich zur Aromaanalytik mittels SPME. Auch hier werden Safran-typische Aromastoffe wie Safranal, Isophoron und 4-Oxoisophoron in den Nebenströmen vorläufig identifiziert. Im finalen Getränk wird von diesen Aromastoffen nur Isophoron nachgewiesen. Dafür werden hier die Aromastoffe Zimtalkohol, Zimtaldehyd, *γ-*Nonalacton und 3-Phenylpropanol nur in dem Extrakt des Getränkes nachgewiesen. Die beschriebenen Geruchseindrücke dieser Verbindungen passen gut zu dem Geruchseindruck des finalen Getränkes.

**Tabelle 8: Vergleich der RI mit Standard-RI (RI_{NIST} & RI_{STD}.) der mittels GC-MS/MS bisher identifizierten Aromastoffe der Flüssig-Flüssig-Extrakte nach SAFE; BB: Blütenblätter, SB: Staubbeutel, G: finales Getränk**

| **SUBSTANZ** | **RI** | **RI_{NIST}** | **RI_{STD}** | **BB** | **SB** | **G** |
|---|---|---|---|---|---|---|
| D-Limonen | 1197 | 1199 | 1196 | | x | |
| 2-Pentylfuran | 1234 | 1230 | 1231 | | x | |
| Pentan-1-ol | 1252 | 1252 | 1251 | | x | |
| Nonanal | 1390 | 1390 | 1388 | x | | |
| Oct-1-en-3-ol | 1449 | 1446 | 1451 | | x | |
| Essigsäure | 1464 | 1452 | 1468 | x | x | x |
| Benzaldehyd | 1522 | 1520 | 1519 | | x | |
| Butan-2,3-diol | 1542 | 1570 | - | x | x | |
| Propansäure | 1553 | 1564 | - | | x | |
| Octa-3,5-dien-2-on | 1568 | 1570 | - | | x | |
| Isobuttersäure | 1579 | 1581 | 1563 | | x | x |
| Isophoron | 1587 | 1595 | 1606 | x | x | x |
| Butyrolacton | 1630 | 1626 | 1639 | | x | x |
| Safranal | 1643 | 1648 | 1657 | x | x | |
| 2-Hydroxyisophoron | 1660 | 1675 | - | | x | |
| 2-Furanmethanol | 1663 | 1649 | - | | | x |
| 2-Butyloct-2-enal | 1664 | 1659 | - | | x | |
| Isovaleriansäure | 1679 | 1680 | 1660 | | x | |
| 2-Methylbuttersäure | 1679 | 1660 | 1666 | x | | x |
| 4-Oxoisophoron | 1688 | 1690 | 1700 | x | x | |
| 2(5H)-Furanon | 1758 | 1745 | 1763 | x | x | x |
| Dihydrooxophoron | 1776 | 1782 | - | | x | |
| Phenylethylformiat | 1784 | 1775 | - | | x | |
| 2-Phenylethylacetat | 1811 | 1809 | 1819 | | x | |
| Dihydro-***β***-ionon | 1827 | 1854 | 1842 | | x | |
| Hexansäure | 1854 | 1858 | 1840 | x | x | |
| Benzylalkohol | 1877 | 1879 | 1871 | | x | |
| Phenylethanol | 1911 | 1915 | 1910 | x | x | x |
| 2-Phenylbut-2-enal | 1928 | 1922 | - | | x | |
| ***β***-lonon | 1933 | 1923 | 1921 | | x | |
| Heptansäure | 1960 | 1954 | 1958 | | x | |
| Maltol | 1964 | 1965 | 1942 | x | | |
| **α**-Acetylpyrrol | 1973 | 1971 | - | | x | |
| p-Anisaldehyd | 2022 | 2038 | 2016 | | x | |
| *γ*-Nonalacton | 2025 | 2028 | 2014 | | | x |
| Zimtaldehyd | 2037 | 2037 | 2046 | | | x |
| 3-Phenylpropanol | 2050 | 2048 | 2044 | | | x |
| Nonansäure | 2171 | 2174 | 2153 | x | x | |
| Palmitinsäuremethylester | 2210 | 2210 | - | x | x | |
| Zimtalkohol | 2287 | 2286 | 2281 | | | x |
| Vanillin | 2566 | 2566 | 2565 | | x | |
| Myristinsäure | 2698 | 2716 | - | | x | |

Die in Tab. 8 sowie auch an anderen Stellen dieser Beschreibung angegebenen bisher identifizierten Geruchs-/Geschmacksstoffe stellen keine abgeschlossene Liste dar, und es können auch einzelne u.U. fehlen, ohne dadurch den Umfang der Erfindung zu verlassen.

Die vorgesehene Fermentation wird beispielsweise in einem Temperaturbereich von 4°C bis 36°C durchgeführt. Für die Fermentation mit Basidiomyceten-Myzel ist - abhängig von dem jeweiligen Basidiomyceten-Stamm - ein Temperaturbereich von 18°C bis 28°C, und vor allem von 20°C bis 26°C besonders geeignet.

Die Dauer der Fermentation durch den Basidiomyceten liegt beispielsweise zwischen 15 min und 72 h oder zwischen 30 min und 36 h.

Der Sauerstoffbedarf bei der aeroben Fermentation variiert in Abhängigkeit von dem eingesetzten Basidiomycetenstamm. Der Sauerstoff wird entweder durch Rühren des Fermentationsmediums an Luft oder durch aktive Begasung mit einer oder mehreren sauerstoffhaltigen Gasmischungen zugeführt. Möglich ist aber auch, dass bereits der in dem Fermentationsmedium vorhandene Sauerstoffgehalt zur Fermentation ausreicht. Es kann zweckmäßig sein, wenn der Sauerstoffgehalt in dem Medium im Verlauf der Fermentation verändert wird.

Des Weiteren sieht die Erfindung vor, dass die Fermentation durch den Basidiomyceten nach Erhalt des gewünschten geschmacklichen Ergebnisses durch Inaktivierung des Organismus (d.h. des verwendeten Basidiomyceten) oder durch Abtrennung des Organismus gestoppt wird. Zur Inaktivierung sind verschiedene Methoden denkbar. Besonders geeignet sind Verfahren zur Pasteurisierung, Sterilisierung, die Ultrahocherhitzung, Einkochen, Tyndallisation und die Thermisation. Diese Methoden können gegebenenfalls an einem oder mehreren verschiedenen Verfahrensstadien wiederholt werden, um das Verfahrensprodukt des jeweiligen Verfahrensstadiums (Verfahrensschrittes) haltbar zu machen.

Daneben können weitere Verfahrensschritte vorgesehen sein. Hierzu zählen insbesondere Maßnahmen zur Klärung eines Zwischenproduktes oder des Endproduktes. Hierbei kommen vor allem folgende Schritte in Betracht, die für sich allein oder nacheinander durchgeführt werden können: Zentrifugation, Grobfiltration, ein- oder mehrstufige Feinfiltration sowie Mikrofeinfiltration.

Denkbar ist weiterhin, dass das direkte Fermentationsprodukt (der fermentative Extrakt) oder das Getränk in einem weiteren, möglicherweise nachgeschalteten Verfahrensschritt mit einem Saft, einem Saftkonzentrat, Wasser, Tee, einem anderen Getränk oder einer Getränkebase, einem alkoholischen Getränk, wie einem Wein (auch Apfelwein oder Reiswein, Schaumwein, Perlwein etc.), einem Bier, einem Likör oder einem Branntwein, gemischt wird, wobei die Verwendung eines natürlich hergestellten Produkts bevorzugt ist.

### Abbildungslegenden und Bezugszeichenliste

- Fig. 1:: Tabelle 4: Übersicht über die sensorische Bewertung der Pilz-Substrat-Kombinationen im Screening; Spalte B: Bewertung des Gesamteindrucks der Emerskulturen auf einer Skala von 0 (sehr negativ) bis 5 (sehr positiv) an dem jeweilig gezeigten Kulturtag (Spalte d).
- Fig. 2A:: Darstellung der Entwicklung des pH-Wertes und der Oxalsäurekonzentration von Beispielen der fermentierten Getränke im Verlauf der Optimierung (Medien 1, 2 und 3; Rohdaten It. Tabelle in Fig. 3).
- Fig. 2B:: Darstellung der Entwicklung des pH-Wertes und der Oxalsäurekonzentration von Beispielen der fermentierten Getränke im Verlauf der Optimierung (Medien 7, 8 und 9; Rohdaten It. Tabelle in Fig. 3).
- Fig. 2B:: Darstellung der Entwicklung des pH-Wertes und der Oxalsäurekonzentration von Beispielen der fermentierten Getränke im Verlauf der Optimierung (Medien 10, 11, 12 und 13; Rohdaten It. Tabelle in Fig. 3).
- Fig. 3:: Tabelle mit den Rohdaten zu den Figuren 2A, 2B und 2C.

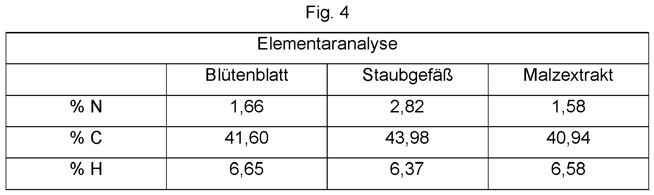

- Fig.4:: Vergleichende Zusammenstellung der elementaren Zusammensetzung verschiedener organischer Kulturmedien-Bestandteile.

## Patentansprüche

1. Getränk, umfassend mindestens einen fermentativen Extrakt, **dadurch gekennzeichnet, dass** der mindestens eine fermentative Extrakt aus mindestens einem Nebenstrom gewonnen ist, der bei der Gewinnung eines Gewürzes aus einer Gewürzpflanze angefallen ist, wobei der mindestens eine Nebenstrom Schalen und/oder Stängel und/oder Stiele und/oder Zweige und/oder Wurzeln und/oder Wurzelstöcke und/oder Zwiebeln und/oder Blätter und/oder ganze Blüten und/oder Blütenblätter und/oder Staubbeutel und/oder Narben derjenigen Gewürzpflanze umfasst, von der der mindestens eine Nebenstrom stammt.

2. Getränk gemäß Anspruch 1, **dadurch gekennzeichnet, dass** es sich bei dem mindestens einen Nebenstrom um einen Safran-Nebenstrom handelt, wobei der mindestens eine Safran-Nebenstrom ganze Blüten und/oder Blütenblätter und/oder Staubbeutel und/oder Narben der Safranpflanze, *Crocus spec.,* umfasst.

3. Verfahren zur Herstellung eines Getränks gemäß Anspruch 1 oder 2, **dadurch gekennzeichnet, dass** es folgende Schritte umfasst:
a) Bereitstellung des Nebenstromes als Bestandteil des Fermentationsmediums, wobei das Fermentationsmedium eine Mischung aus einer wässrigen Flüssigphase und einer dispergierten Festphase ist, und wobei die dispergierte Festphase aus Zellen und/oder Zellbestandteilen und/oder Zellagglomeraten besteht, wobei Zellagglomerate auch ganze Blüten, ganze Blütenblätter, ganze Staubbeutel, ganze Schalen, ganze Stängel, ganze Stiele, ganze Zweige, ganze Wurzeln, ganze Wurzelstöcke, ganze Zwiebeln ganze Blätter umfassen;
b) Inokulation des gemäß Schritt a) bereitgestellten Fermentationsmediums mit Myzel oder Sporen mindestens eines Pilzes der Abteilung Basidiomycota;
c) Fermentation des gemäß Schritt b) inokulierten Fermentationsmediums;
d) Gewinnung des fermentativen Extraktes durch zumindest teilweise Abtrennung der wässrigen Flüssigphase des Fermentationsmediums von der Festphase des Fermentationsmediums, wobei die Abtrennung durch mindestens ein Verfahren erfolgt, ausgewählt aus der Liste umfassend Dekatieren, Filtrieren, Zentrifugieren.

4. Verfahren gemäß Anspruch 3, **dadurch gekennzeichnet, dass** es weiterhin folgenden Schritt umfasst:
e) Vermischen des gemäß Schritt d) gewonnenen fermentativen Extraktes mit optionalen weiteren Bestandteilen des Getränkes, unabhängig voneinander ausgewählt aus der Liste umfassend, Wasser, Ethanol, Kohlendioxid, Zucker, Zuckerersatzstoffe, Farbstoffe, Aromastoffe, Konservierungsmittel, Lebensmittelzusatzstoffe.

5. Verfahren gemäß Anspruch 3 oder 4, **dadurch gekennzeichnet, dass** die Fermentationsbedingungen in folgenden Bereichen gehalten werden:
- Temperatur: 0 °C bis 50°C, bevorzugt 10°C bis 40 °C und besonders bevorzugt 15 - 30 °C
- pH-Wert: 1,0 bis 9,0, bevorzugt 1,5 bis 8,0 und besonders bevorzugt 1,7 - 6,5
- Fermentationsdauer : 0,25 h bis 300 h, bevorzugt 1 h bis 200 h und besonders bevorzugt 12 h - 168 h.

6. Verfahren gemäß einem der vorstehenden Ansprüche 3 bis 5, **dadurch gekennzeichnet, dass** der gemäß Schritt d) gewonnene fermentative Extrakt mindestens einem Reinigungs- und/oder einem Sterilisationsschritt unterzogen wird.

7. Verfahren gemäß einem der vorstehenden Ansprüche 3 bis 6, **dadurch gekennzeichnet, dass** es sich bei dem mindestens einen Pilz der Abteilung Basidiomycota um einen Pilz handelt, ausgewählt aus der Liste umfassend A. *xantha, B. corium, F. fomentarius, F. betulina, F. pinicola, H. araucariae, H. marmoreus, I. benzoinum, L. sulphurous, L. betulina, P. radiate, P. pulmonarius, T. suaveolens, T. chioneus, W cocos.*
